# EUROPEAN PATENT APPLICATION

(11) **EP 1 220 099 A2**
(43) Date of publication of application: **03.07.2002**
(21) Application number: 01310928.5
(22) Date of filing: 28.12.2001
(51) Int. Cl.: G06F 11/36

(54) **Debugger system, method of extending debug functions of a debugger system and debugger program product**

(30) Priority: 28.12.2000 JP 2000402738
(71) Applicant: Kabushiki Kaisha Toshiba, Tokyo 105-8001 (JP)
(72) Inventor: Tabe, Tetsuya, c/o Intellectual Property Division, Minato-ku, Toshiba (JP); Nagao, Yoshihiro, c/o Intellectual Property Div., Minato-ku, Toshiba (JP)
(74) Representative: Midgley, Jonathan Lee

(57) **Abstract**

A debugger program product is described which comprises a computer readable medium having computer program logic stored therein for debugging the operation of a target system which is provided with a microprocessor. The debugger program product including a framework module configured such that it can be dynamically linked to a function module which serves to provide a debug function for use in debugging the operation of the target system and can be connected to a simulator capable of performing the simulation of the target system in order to debug the operation of the target system by the use of the debug function of the function module.

## Description

### CROSS REFERENCE TO RELATED APPLICATIONS

This application is based upon and claims the benefit of priority from prior Japanese Patent Application P2000-402738 filed on December 28th, 2000; the entire contents of which are incorporated by reference herein.

### BACKGROUN OF THE INVENTION

### 1. Field of the invention

The present invention relates to a debugger system, a method of extending debug functions of a debugger system and a debugger program product stored in a computer readable medium for development and evaluation of information processing systems such as those implemented with microcomputers.

### 2. Description of the Related Art

Debugger systems have been utilized as tools for development and evaluation of information processing systems such as those implemented with microcomputers. While a number of functions of a debugger system are implemented in the information processing system, some functions have to be added and/or changed when the debugger system is applied for microcomputers in which are implemented different functions. In such a case, the debugger program has to be changed for different microcomputers. Namely, in order to change the debug functions after finishing the development of a debugger program, it is necessary to add control parts such as option menus, input buttons functioning as interfaces for making use of a new debug function the debugger program.

In other words, the entirety of the debugger program has to be rebuilt in order to add new interfaces to the debugger program. Because of this, a number of steps are required for rectification of the debugger program while the quality of the debugger program tends to be degraded in the course of the modification. On the other hand, when the user wants to enjoy new debug functions, it is necessary to purchase and reinstall the new debugger program. This is a troublesome procedure for the user requiring substantial work load and costs.

As explained above, it is necessary to rebuild the entirety of the debugger program for addition and modification of the debug functions in accordance with a conventional technique and therefore a much time and substantial labour is required resulting in degradation of the quality of the debugger program in the course of the modification.

### BRIEF SUMMARY OF THE INVENTION

An aspect of the present invention provides a method of extending debug functions of a debugger system for debugging the operation of a target system, said method comprising:
registering by a framework module a function module in which are provided at least one of an option menu information item, a window information item and an input button information item for use in generating at least one an option menu, a window and an input button through which a predetermined debug function is controlled;
registering said at least one of the option menu information item, the window information item and the input button information item by an interface generation unit which includes at least one of an option menu generation unit, a window generation unit and an button generation unit; and
creating said at least one of said option menu, said window and said input button with reference to said at least one of the option menu information item, the window information item and the input button information item in order to control the operation of the debugger system through a manipulation screen thereof.

Another aspect of the present invention provides a debugger system for debugging the operation of a target system, said target system comprising:
a debugger program as installed in a computer and configured to register by a framework module a function module including at least one of an option menu information item, a window information item and an input button information item for use in generating at least one an option menu, a window and an input button through which a predetermined debug function, to register said at least one of the option menu information item, the window information item and the input button information item in an interface generation unit which includes at least one of an option menu generation unit, a window generation unit and an button generation unit; and to create said at least one of said option menu, said window and said input button with reference to said at least one of the option menu information item, the window information item and the input button information item in order to enable manipulation of the debugger system through a manipulation screen thereof,
when the debug function is selected in the debugger system to use the debug function for debugging the operation of the target system, said framework module serves to call said function module corresponding to the debug function as selected; and wherein displaying said at least one of said option menu, said window and said input button in the manipulation screen in order that said debugger system performs debugging the target system in accordance with the debug function as selected by manipulation of said at least one of said option menu, said window and said input button; and
a test tool configured to save said function module to be registered in said debugger program so that it takes control of debugging processes and to make it possilbe that said function module is dynamically linked to said debugger program when the function module is registered.

A further aspect of the present invention provides a debugger program product comprising a computer readable medium having computer program logic stored therein for debugging the operation of a target system, said debugger program product including:
a program routine configured to register by a framework module a function module in which are provided at least one of an option menu information item, a window information item and an input button information item for use in generating at least one an option menu, a window and an input button through which a predetermined debug function is controlled;
a program routine configured to register said at least one of the option menu information item, the window information item and the input button information item by an interface generation unit which includes at least one of an option menu generation unit, a window generation unit and an button generation unit; and
a program routine configured to create said at least one of said option menu, said window and said input button with reference to said at least one of the option menu information item, the window information item and the input button information item in order to control the operation of the debugger system through a manipulation screen thereof.

A still further aspect of the present invention provides a debugger program product comprising a computer readable medium having computer program logic stored therein for debugging the operation of a target system which is provided with a microprocessor, said debugger program product including:
a framework module configured such that it can be dynamically linked to a function module which serves to provide a debug function for use in debugging the operation of said target system and can be connected to a simulator capable of performing the simulation of said target system in order to debug the operation of said target system by the use of the debug function of said function module.

### BRIEF DESCRIPTION OF THE DRAWINGS

Fig. 1 is a schematic diagram for explaining the mechanism of extending the functions of a debugger program in accordance with an embodiment of the present invention.
Fig.2 is a schematic diagram showing the procedure in which a new function module is installed by a framework module which then generates an option menu and the like followed by actually using the new debug function as added.
Fig.3 is a schematic diagram showing examples of an option menu, an input button, a window as displayed in the screen of the debugger program.
Fig.4 is a schematic diagram for explaining the mechanism of extending the functions of a debugger program in accordance with another embodiment of the present invention.
Fig.5 is schematic diagram showing a debugger system in the case making use of a simulator will be explained.
Fig.6 is an explanatory view for explaining the debugger system making use of a simulator in accordance with a further embodiment of the present invention and showing the memory configuration of the computer system in which the debugger system is implemented.

### DETAILED DESCRIPTION OF THE INVENTION

In the followings, various embodiments of the present invention will be described with reference to the accompanying drawings.

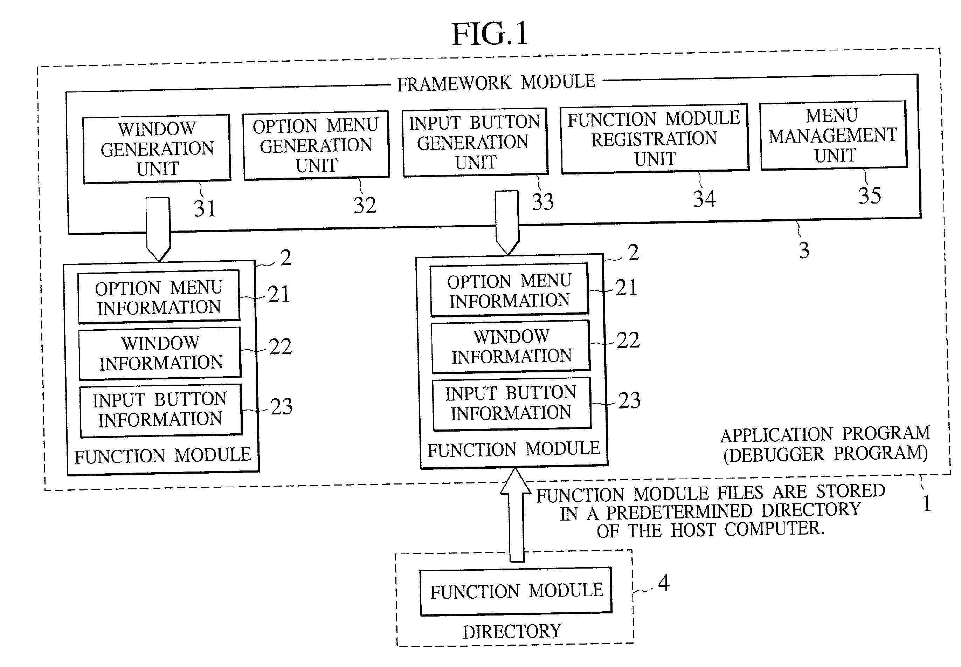

Fig.1 is a schematic diagram for explaining the mechanism of extending the functions of a debugger program in accordance with an embodiment of the present invention. In the figure, the debugger program is an application program 1 installed in a computer and comprises a plurality of function modules 2 and a framework module 3 which is configured to accept a new function module and enable to install a new debug function or replace a previous debug function by a new debug function with reference to information provided within the new function module.

For example, one of the function modules 2 may serve to provide a single debug function such as referring and accessing to memories. The number of the function modules 2 is equal to the number of the debug functions required for the debugger program. Each function new module is implemented with information for creating an option menu(s) 21, a window(s) 22 and an input button(s) 23. The framework module 3 makes use of the information to create the option menus, the windows and the input buttons in the screen. For example, the option menu information 21 contains character strings and the ID of each option menu. The function modules 2 have been prepared as test tools for adding and/or changing the debug functions and stored as one file for each module in a predetermined directory 4 of the host computer.

The framework module 3 serves to manage and control the function modules 2 to provide a debugging means with an appropriate interface for the user. Particularly, the framework module 3 is provided with a window generation unit 31, an option menu generation unit 32 and an input button generation unit 33 as interface generation units for providing an integrated interface through which the user can manipulate the debugger program. Also, the framework module 3 is provided with a function module registration unit 34 and a menu management unit 35 for registering and managing the function modules 2.

The function modules 2 serve to provide the framework module 3 with the option menu information, the window information and the input button information. The interface generation unit of the framework module 3 serves to display the option menus, the input buttons and the windows with which the debug functions are available and controlled through the screen of the host computer. By this configuration, it is possible to generate a window, a menu and the like for using a new debug function only by adding a new function new module and therefore to extend the debug functions of the debugger program without troublesome procedures.

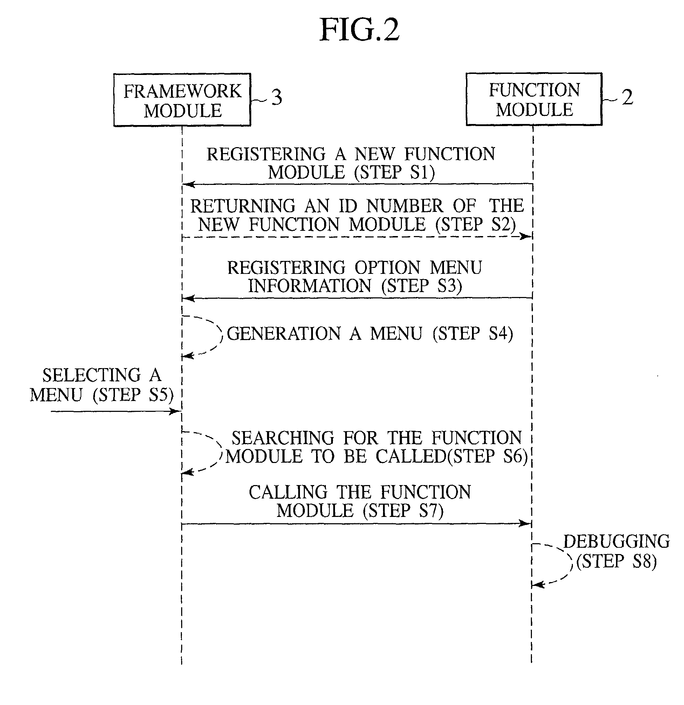

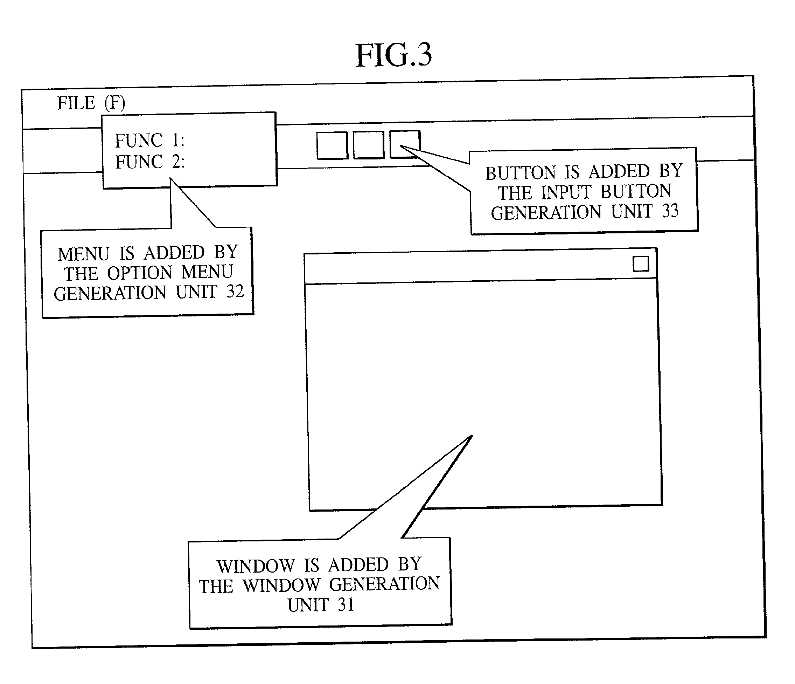

Next, the procedure of the use of a new debug function will be explained as steps S1 through S8 in which a new function module is installed by the framework module 3 which then generates an option menu and the like with reference to the option menu information, the window information and the input button information provided from the function module followed by actually using the new debug function as added. Fig.2 is a schematic diagram showing this flow while Fig.3 is a schematic diagram showing examples of an option menu, an input button, a window as displayed in the screen of the debugger program.

First, a new function module to be registered in the debugger program is provided as a file stored in a predetermined directory of the host computer such as a personal computer (PC). The framework module 3 then searches the predetermined directory of the host computer for the new function module that has not been registered yet in the step S1 in Fig.2. At this time when registering the new function module, an ID number is alloted to the new function module in the step S2 in Fig.2 for distinguishing the new function module from the other modules.

The option menu information in the registered function module is registered by the option menu generation unit 32 of the framework module 3 in the step S3 in Fig.2. The option menu information as registered includes character strings which are displayed indicative of options of a menu and the ID of one option menu for distinguishing the option menu from other option menu(s) when one function module includes a plurality of the option menus. At this time, the framework module 3 serves to register the ID number of the function module by means of the function module registration unit 34. The framework module 3 serves to generate the name of the option menu with reference to the option menu name contained in the option menu information as registered and to display the name of the option menu as added and generated in the screen window of the debugger program, for example, in the top left side thereof in the step S4 in Fig.2. Also, the ID number of each option menu and the ID number of the function module are registered in the menu management unit 35.

Next, when the user of the debugger program selects the option menu as registered in the step S5, the framework module 3 then searches the menu management unit 35 in the step S6 for the function module including the option menu as selected with reference to the ID number of the function module and then calls the function module in the step S7. At this time, the ID number of the option menu as selected is given to the function new module. The function new module as called identifies a function to be executed with reference to the ID number as given and executes the function in the step S8. Meanwhile, the input button as illustrated in Fig.3 is generated, displayed in the screen and manipulated in the same manner as the option menu as described above. Also, the window as illustrated in Fig.3 is generated, displayed in the screen and manipulated in the same manner.

By this configuration in accordance with the embodiment, it is possible to add a new debug function to the debugger program even after releasing the debugger program. Also, even when a bug is found in a debug function, it is possible to replace only the function module responsive to the debug function. Also, since a new debug function can be added without modifying the debugger program itself as released, it is possible to decrease the number of work steps required for the addition and improve the quality of the debugger program. Furthermore, it is possible to provide debugger programs capable of supporting the respective functions of the test tools as connected to the debugger program and therefore possible to make use of the existing test tool for utilizing a new test tool or a new function of the existing test tool.

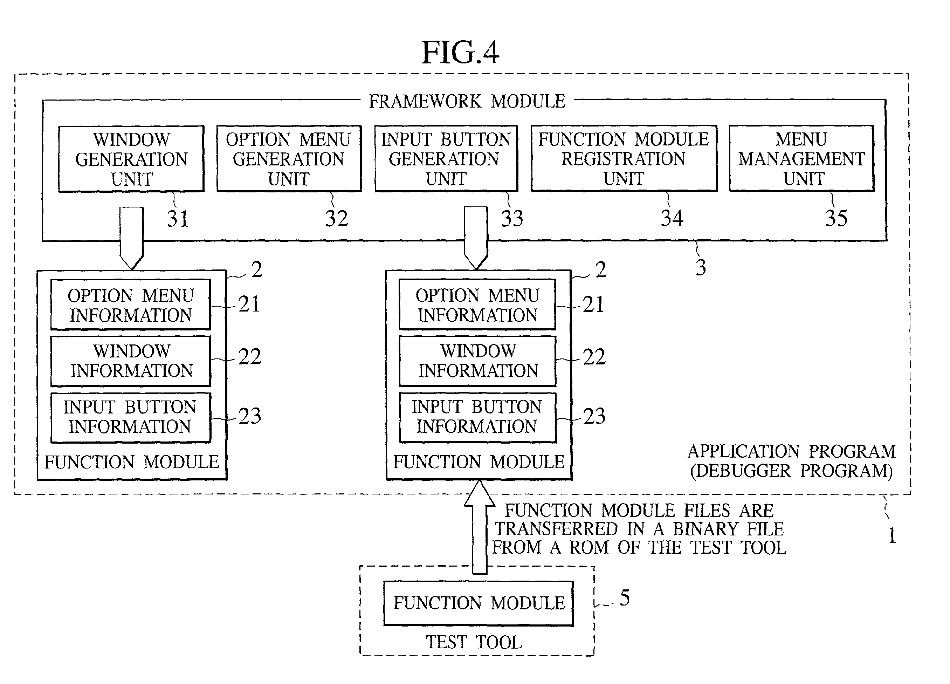

Fig.4 is a schematic diagram for explaining the mechanism of extending the functions of a debugger program in accordance with another embodiment of the present invention.
In this case of the present embodiment, a debugger system is implemented with a debugger program which is connected to a simulator, an emulator or a test board. The function new module is included in the test tool 5 and registered to the debugger program from the test tool 5 as illustrated in Fig.4. The basic mechanism is same as in the embodiment as illustrated in Fig. 1 so that redundant description will be dispensed with.

For example, in the case where the test tool 5 is implemented with an emulator as a hardware connected to the target system, the emulator is provided with a ROM in which is stored a function module together with a GUI interface program through which the debug function of the function new module can be used. When the emulator is connected to the debugger program, the GUI interface program is transferred to the framework module 3 of the debugger program in the host computer for registration.

In the case of this embodiment, while this embodiment has similar advantages as the previous embodiment, it is also possible to use a new test tool such as a new emulator having extended functions by means of the current debugger program.

As another embodiment, it is also possible to store the function modules in a server computer located remote from the debugger program instead of the host computer located together with the debugger program. The function modules 2 are registered from the remote server through a communication line. In accordance with this embodiment, while there are similar advantages as in the previous embodiment, it is also possible to update part of the function modules not only in a local site where the debugger program is provided but also from a remote site.

As a further embodiment, it is possible to register a function module with reference to a function control file which contains a description about installation procedures thereof and is provided for the system as illustrated in Fig.1. For example, the function control file may contains installation procedures in a plurality of languages on the basis of which the language of the option menus is switched for each environment of the respective countries. Alternatively, the function control file may be designed also as a password control file in order that only the authorized users can add a new debug function on the basis of the password control file. Alternatively, the function control file may be designed also as a selection control file in order to make it possible to select one or more function modules among a number of available function modules in accordance with selection steps as described in the selection control file. In accordance with these modifications, it is possible to implement a variety of installation mechanisms for function modules.

Meanwhile, the program supporting extension of the debug functions as described above for installing a new debug function can be read and executed through development and evaluation tools such as a debugger program and stored in a storage medium. The debugger program is loaded to a tool for development and evaluation from the storage medium and executed in order to add a new function module, taking control of the tool. In this case, the storage medium includes a memory device, a magnetic disk storage device, an optical disk device and so forth which can be used to store the debugger program and from which the debugger program can be loaded to a tool for development and evaluation.

As explained above, since there are provided a function module having a single debug function and a framework module for managing the function module and making it possible to use the debug function in accordance with the embodiment of the present invention, it is possible to easily add and change debug functions and to decrease the number of work steps required for the addition and improve the quality of the debugger program.

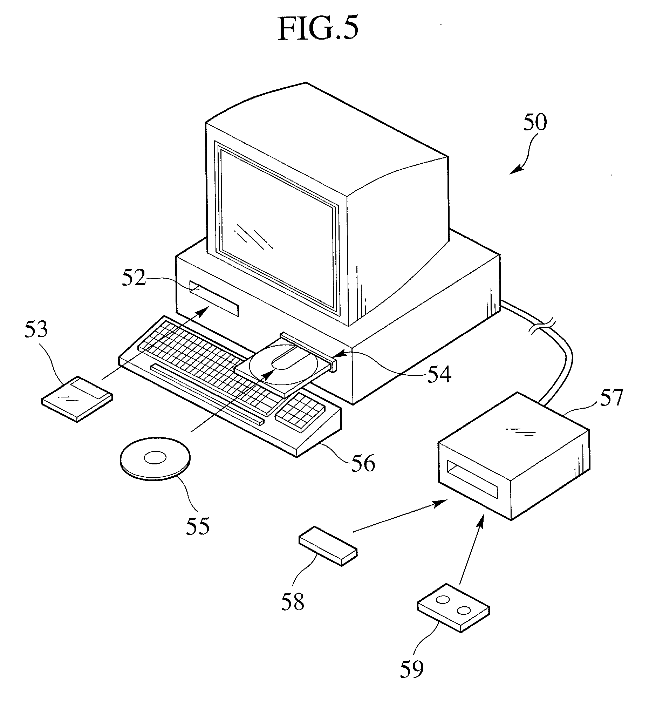

Among from several implementations, the case making use of a simulator is particularly effective at the initial stages of development of the target system because of lower inventory risks, easy design changes and no need for a prototype. In the following description, the case making use of a simulator will be explained. A simulator as used in accordance with this embodiments of the present invention is implemented with a so called general-purpose machine, a workstation, a PC (Personal Computer), and an NC (Network Computer) or the like. This system has its appearance shown in Fig.5, for example, and comprises a floppy disk drive 52 and an optical disk drive 54. Then, a floppy disk 53 is inserted into a floppy disk drive 52; an optical disk 55 is inserted into an optical disk drive 54; and predetermined readout operation is performed, whereby programs stored in these recording media can be installed in a computer system. In addition, a predetermined drive device 57 is connected, whereby installation or data reading and writing can be executed by using a ROM 58 that serves as a memory device or a cartridge 59 that serves as a magnetic tape. In addition, the debugger system in accordance with the embodiments of the present invention may be provided in the form of a file and stored in a computer readable recording medium as well as the simulator. Then, in performing the debug process, this recording medium is read by a computer system; the debugger system is stored as well as the simulator in a storage unit such as memory incorporated in the computer system; and the debugger system is executed by a computing device. The recording media used here comprises a computer readable recording media capable of recording, for example, a semiconductor memory, a magnetic disk, an optical disk, a magneto-optical disk, a magnetic tape, and a transmission medium.

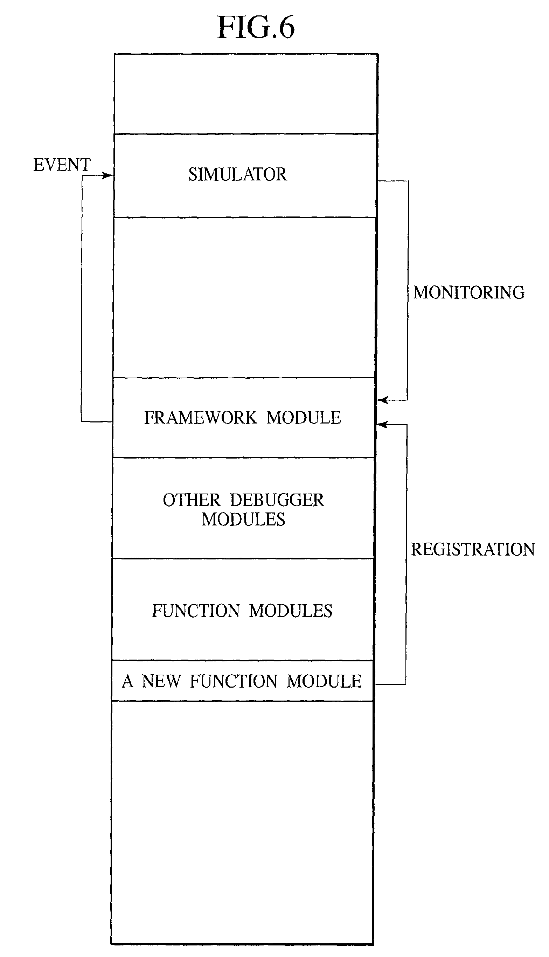

Fig.6 is an explanatory view for explaining the debugger system making use of a simulator in accordance with a further embodiment of the present invention and showing the memory configuration of the computer system in which the debugger system is implemented. A framework module and a simulator are loaded to the memory of the computer system as well as other necessary debugger modules which serve as a debugger system in cooperation with the framework module. The simulator serves to simulate the operation of the target system including a microprocessor mounted thereon.

An additional function module is installed by loading it to the memory of the computer system from a computer readable recording media. At this time, as described above, the function module is registered in the framework module and dynamically linked to the framework module. in this case, "dynamically linking" is meant and established such that the framework module gets an access (the entry point address) to the debug function of the function module without need for rebuilding in order to call the debug function anytime when requested by the user. When the framework module makes use of the debug function of the function module, the framework module causes a virtual event to the target system as simulated by the simulator. The operation of the target system is then evaluated by means of the debug function.
The foregoing description of the embodiments has been presented for purposes of illustration and description. It is not intended to be exhaustive or to limit the invention to the precise form described, and obviously many modifications and variations are possible in light of the above teaching. The embodiment was chosen in order to explain most clearly the principles of the invention and its practical application thereby to enable others in the art to utilize most effectively the invention in various embodiments and with various modifications as are suited to the particular use contemplated.

## Claims

1. A method of extending debug functions of a debugger system for debugging the operation of a target system, said method comprising:
registering by a framework module a function module in which are provided at least one of an option menu information item, a window information item and an input button information item for use in generating at least one an option menu, a window and an input button through which a predetermined debug function is controlled;
registering said at least one of the option menu information item, the window information item and the input button information item by an interface generation unit which includes at least one of an option menu generation unit, a window generation unit and an button generation unit; and
creating said at least one of said option menu, said window and said input button with reference to said at least one of the option menu information item, the window information item and the input button information item in order to control the operation of the debugger system through a manipulation screen thereof.

2. The method of extending debug functions of a debugger system as claimed in claim 1 wherein
when the debug function is selected in the debugger system to use the debug function for debugging the operation of the target system, said framework module serves to call said function module corresponding to the debug function as selected; and wherein
displaying said at least one of said option menu, said window and said input button in the manipulation screen in order that said debugger system performs debugging in accordance with the debug function as selected by manipulation of said at least one of said option menu, said window and said input button.

3. A debugger system for debugging the operation of a target system, said target system comprising:
a debugger program as installed in a computer and configured to register by a framework module a function module including at least one of an option menu information item, a window information item and an input button information item for use in generating at least one an option menu, a window and an input button through which a predetermined debug function, to register said at least one of the option menu information item, the window information item and the input button information item in an interface generation unit which includes at least one of an option menu generation unit, a window generation unit and an button generation unit; and to create said at least one of said option menu, said window and said input button with reference to said at least one of the option menu information item, the window information item and the input button information item in order to enable manipulation of the debugger system through a manipulation screen thereof,
when the debug function is selected in the debugger system to use the debug function for debugging the operation of the target system, said framework module serves to call said function module corresponding to the debug function as selected; and wherein displaying said at least one of said option menu, said window and said input button in the manipulation screen in order that said debugger system performs debugging the target system in accordance with the debug function as selected by manipulation of said at least one of said option menu, said window and said input button; and
a test tool configured to save said function module to be registered in said debugger program so that it takes control of debugging processes and to make it possilbe that said function module is dynamically linked to said debugger program when the function module is registered.

4. A debugger program product comprising a computer readable medium having computer program logic stored therein for debugging the operation of a target system, said debugger program product including:
a program routine configured to register by a framework module a function module in which are provided at least one of an option menu information item, a window information item and an input button information item for use in generating at least one an option menu, a window and an input button through which a predetermined debug function is controlled;
a program routine configured to register said at least one of the option menu information item, the window information item and the input button information item by an interface generation unit which includes at least one of an option menu generation unit, a window generation unit and an button generation unit; and
a program routine configured to create said at least one of said option menu, said window and said input button with reference to said at least one of the option menu information item, the window information item and the input button information item in order to control the operation of the debugger system through a manipulation screen thereof.

5. A debugger program product comprising a computer readable medium having computer program logic stored therein for debugging the operation of a target system which is provided with a microprocessor, said debugger program product including:
a framework module configured such that it can be dynamically linked to a function module which serves to provide a debug function for use in debugging the operation of said target system and can be connected to a simulator capable of performing the simulation of said target system in order to debug the operation of said target system by the use of the debug function of said function module.

6. A debugger program product as claimed in claim 5 comprising a computer readable medium having computer program logic stored therein for debugging the operation of a target system which is provided with a microprocessor, wherein
said function module is provided with at least one of an option menu information item, a window information item and an input button information item for use in generating at least one an option menu, a window and an input button through which a predetermined debug function is controlled; and wherein
said framework module refers to said at least one of the option menu information item, the window information item and the input button information item for creating said at least one of said option menu, said window and said input button with reference to said at least one of the option menu information item, the window information item and the input button information item in response to a request by a user in order to control the operation of the debugger system through a manipulation screen thereof.
